# EUROPÄISCHE PATENTSCHRIFT

(11) **EP 1 426 247 B1**
(45) Veröffentlichungstag und Bekanntmachung des Hinweises auf die Patenterteilung: **12.04.2006**
(21) Anmeldenummer: 03025723.2
(22) Anmeldetag: 10.11.2003
(51) Int. Cl.: B60R 21/20

(54) **Gassack-Rückhalteeinrichtung**
Airbag Restraint System
Système de retenue avec airbag

(30) Priorität: 05.12.2002 DE 20218874 U
(43) Veröffentlichungstag der Anmeldung: 09.06.2004
(73) Patentinhaber: TRW Automotive Safety Systems GmbH, 63743 Aschaffenburg (DE)
(72) Erfinder: Heil, Andreas, 63743 Aschaffenburg (DE); Schneider, Michael Dr., 63834 Sulzbach (DE)
(74) Vertreter: Kitzhofer, Thomas

(56) Entgegenhaltungen:
- EP-A- 1 219 504
- EP-A- 1 243 482
- WO-A-02/18181
- DE-A- 10 065 463

## Beschreibung

Die Erfindung betrifft eine Gassack-Rückhalteeinrichtung nach dem Oberbegriff des Anspruchs 1.

Eine gattungsgemäße Gassack-Rückhalteeinrichtung zeigt die DE 100 65 463 A1.

Eine weitere Gassack-Rückhalteeinrichtung ist aus der DE 197 49 914 A1 bekannt. Der Gassack ist ein sogenannter Ring-Gassack, welcher eine von der Vorderwand ausgehende zentrische Einbuchtung besitzt, die bis nahe des Gasgenerators ragt. Der mittlere Abschnitt bleibt beim Aufreißen der Abdeckkappe stehen. Die Abdeckkappe hat in etwa in der Mitte der Austrittsöffnung eine ringförmige Aufreißlinie, von der aus sich radiale Aufreißlinien nach außen und nach innen erstrecken. Wird die Abdeckkappe geöffnet, so entstehen von der ringförmigen Aufreißlinie aus innere und äußere Segmentabschnitte, die nach außen schwenken, um die Austrittsöffnung freizugeben.

Die Erfindung schafft eine Gassack-Rückhalteeinrichtung, bei der die Abdeckkappe dem Gassack beim Entfalten einen geringen Widerstand entgegensetzt, und zwar im Bereich der Einbuchtung des Gassacks. Ferner wird eine einfache Befestigung der Abdeckkappe am Plakettenteil geschaffen. Dies wird durch eine Gassack-Rückhalteeinrichtung erreicht. begrenzt ist, wobei die Aufreißlinie an den inneren Rand der Austrittsöffnung angrenzt.

Der mittlere Abschnitt besitzt eine Aufnahmeöffnung für das Plakettenteil. Die Aufnahmeöffnung muß so ausgeführt sein, dass die Abdeckkappe von oben auf das Plakettenteil aufgesetzt werden kann, so dass sich das Plakettenteil durch die Aufnahmeöffnung hindurchschiebt und der innere Rand des mittleren Abschnitts unter einen seitlich abstehenden Rand des Plakettenteils schnappt. Auf diese Weise kann eine Rast- oder Schnappverbindung zwischen dem mittleren Abschnitt und dem Plakettenteil erreicht werden, so dass die Abdeckkappe ohne großen Aufwand am Ende der Montage des Gassackmoduls einfach von oben auf dieses aufgeschoben wird.

Im Stand der Technik nach der DE 197 49 914 A1 lag die Aufreißlinie etwa in der Mitte der Austrittsöffnung, bei der erfindungsgemäßen Gassack-Rückhalteeinrichtung am inneren Rand derselben. Das bedeutet, der mittlere Abschnitt weist keine radialen Aufreißlinien auf, durch die beim Aufreißen Segmente entstehen, an denen die Einbuchtung des Gassacks beim Entfalten entlang gleitet. In diesem Bereich muß also am mittleren Abschnitt kein Fortsatz oder dergleichen nach außen geschwenkt werden. Der mittlere Abschnitt setzt dem sich entfaltenden Gassack wenig Widerstand entgegen, denn, wie bereits erläutert, ist die Aufreißlinie, die den äußeren Umfang des mittleren Abschnitts begrenzt, nahe der Austrittsöffnung.

Die Aufreißlinie definiert vorzugsweise sogar den inneren Rand der Austrittsöffnung.

Der mittlere Abschnitt ist gemäß der bevorzugten Ausführungsform starr ausgebildet, d.h. aus demselben Material wie die üblicherweise relativ starr ausgebildete Abdeckkappe.

Die Aufreißlinie sollte in diesem Zusammenhang möglichst unmittelbar an den äußeren Rand des Plakettenteils angrenzen, damit die vom Plakettenteil auf den mittleren Abschnitt ausgeübte Haltekraft möglichst nahe an der Aufreißlinie liegt.

Das Plakettenteil kann unterseitig eine Vertiefung besitzen, in die ein wulstartiger Fortsatz des mittleren Abschnitts ragt, um zudem eine Art formschlüssige Verbindung zu erzielen.

Die Abdeckkappe sollte ferner im wesentlichen bündig außen an das Plakettenteil anschließen, das bedeutet, das Plakettenteil sollte in axialer Richtung (d.h. in Richtung der Achse des Lenkrads, das die Gassack-Rückhalteeinrichtung trägt) nicht gegenüber der Abdeckkappe vorstehen. Damit kann verhindert werden, dass das Plakettenteil seitlich aufwendig gestaltet werden muß, um an die hochwertig ausgeführte Vorderseite des Plakettenteils angepasst zu sein.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine stilisierte Schnittansicht einer erfindungsgemäßen Gassack-Rückhalteeinrichtung mit einem entfalteten Gassack,
- Figur 2 eine abschnittsweise Draufsicht auf die Abdeckkappe des Gassackmoduls,
- Figur 3 eine Schnittansicht längs der Linie III-III in Figur 2, die die Befestigung der Abdeckkappe am Plakettenteil zeigt, und
- Figur 4 eine Schnittansicht längs der Linie IV-IV in Figur 2, die ebenfalls die Befestigung der Abdeckkappe am Plakettenteil zeigt.

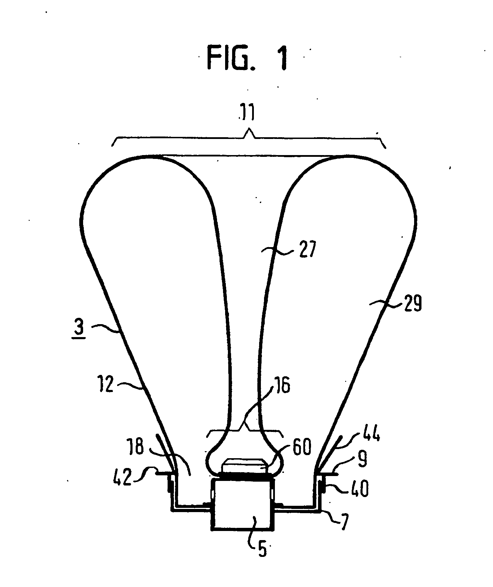

In Fig. 1 ist eine Gassack-Rückhalteeinrichtung mit einem Gassackmodul gezeigt, das einen Gassack 3, einen Gasgenerator 5 und ein topfförmiges Modulgehäuse 7 aufweist, welches von einer Abdeckkappe 9 geschlossen wird. Der Gassack hat eine Wand mit mehreren Abschnitten, nämlich mit einer Vorderwand 11, die dem zurückzuhaltenden Insassen zugewandt ist und auf die dieser im Rückhaltefall prallen kann, sowie einer Rückwand 12. Im Bereich der Vorderwand 11 ist eine tiefe Einbuchtung 27 im aufgeblasenen Zustand vorgesehen, die dadurch entsteht, daß ein Zentrumsabschnitt 16 der Vorderwand 11 bleibend am Modul, genauer gesagt an einem den Gasgenerator 5 umgebenden Diffusorkäfig 15 befestigt ist und dadurch an einer Bewegung beim Aufblasen des Gassacks 3 aus dem Modul heraus gehindert wird. Durch die Einbuchtung 27 erhält der Gassack eine ringförmige, mit Gas zu befüllende Kammer 29. In Fig. 1 ist auch noch die ringförmige Austrittsöffnung 18 dargestellt, über die der Gassack 3 aus dem Gassackmodul austritt. Die Einbuchtung 27 kann nach oben z.B. durch einen geeigneten Zuschnitt des Gassacks bei voll aufgeblasenem Gassack auch geschlossen sein.

Die Abdeckkappe 9 besteht aus mehreren Abschnitten, nämlich einer Umfangswand 40, die am Modulgehäuse 7 befestigt ist, und einer Vorderwand 42. Die Vorderwand 42 hat mehrere Abschnitte, unter anderem einen Abschnitt 44, der beim Öffnen nach außen schwenkt und die Austrittsöffnung 18 schließt bzw. freigibt. Radial einwärts des Abschnitts 44 schließt sich an diesen einstückig ein mittlerer Abschnitt 46 an, der vom Abschnitt 44 durch eine ringförmige, geschlossen umlaufende Aufreißlinie 48 begrenzt ist. Die Aufreißlinie 48 wird durch eine rückseitige Nut definiert. Von der Aufreißlinie 48 erstrecken sich sternförmig radiale Aufreißlinien 50 über den Abschnitt 44 nach außen, so dass zwischen diesen Aufreißlinien 50 segmentartige Zwischenabschnitte 52 gebildet werden, die zusammen den Abschnitt 44 definieren. Beim Aufreißen entstehen segmentartige Klappen, die, wie in Figur 1 gezeigt, nach außen schwenken.

Der mittlere Abschnitt 46 ist bleibend am Rest des Moduls befestigt und schwenkt nicht nach außen. Die Befestigung des mittleren Abschnitts 46 erfolgt durch ein zentrales Plakettenteil 60, welches durch eine Aufnahmeöffnung 62 im mittleren Abschnitt 46 hindurchragt und am Diffusorkäfig 15 z.B. durch eine Schraubverbindung befestigt ist.

Das Plakettenteil besteht aus mehreren Abschnitten, nämlich aus einem Trägerabschnitt 64, der eine pilzförmige Gestalt hat und an seinem oberen Ende einen seitlich abstehenden Rand 66 besitzt, und einen von außen aufgesetzten, ein hochwertiges Äußeres aufweisenden Plakettenabschnitt 68, vorzugsweise mit Chromapplikationen.

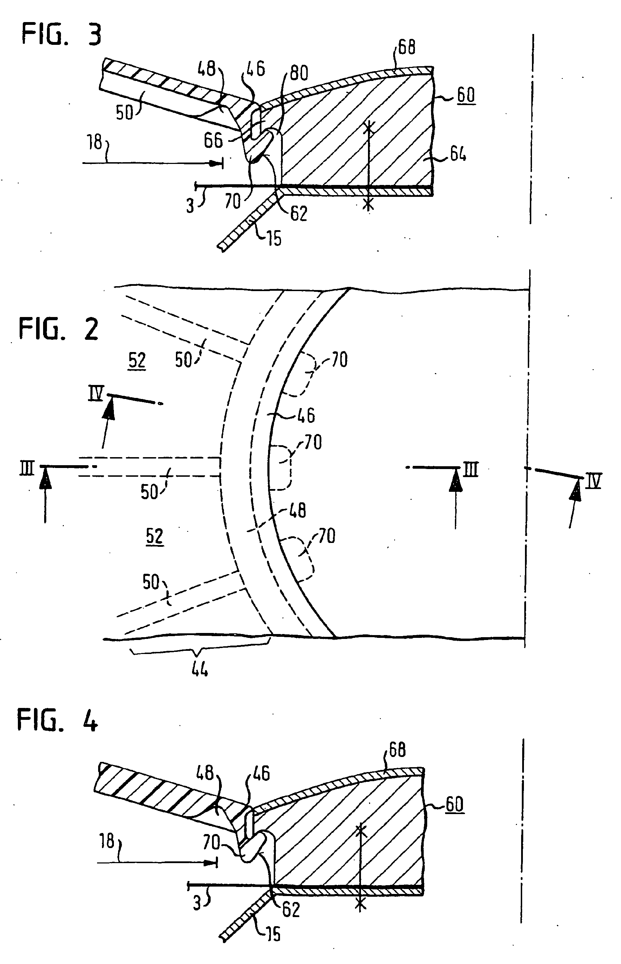

Der mittlere Abschnitt 46 hat einen die Aufnahmeöffnung 62 definierenden hakenförmigen Wulst 70, der, wie im Vergleich der Figuren 3 und 4 sichtbar ist, nur in gewissen Abschnitten das hakenförmige Ende aufweist. Unter dem seitlich abstehenden Rand 66 hat das Plakettenteil 60 eine nutartige Vertiefung 80, in die der Wulst 70 hineinragt, um seitlich zusätzlich gehalten zu werden.

Vom Wulst 70 aus erstreckt sich der mittlere Abschnitt nach oben, um schließlich bündig mit der Außenseite des Plakettenabschnitts 68 abzuschließen. Die Seiten des Trägerabschnitts 46 müssen deshalb nicht lackiert oder auf andere Weise dem qualitativ hochwertigen Eindruck des Plakettenabschnitts 68 angepaßt sein.

Die Abdeckkappe 9 wird zur Befestigung einfach von oben auf das restliche Gassackmodul aufgeschoben, wobei der mittlere Abschnitt 46 nach außen gedrückt wird, bis der innere Rand des mittleren Abschnitts 46, der teilweise durch den segmentartigen Wulst 70 gebildet ist, den seitlich abstehenden Rand 66 des Plakettenteils 60 hintergreift, radial einwärts schnappt, so dass eine Art Rastverbindung entsteht.

Diese formschlüssige Rastverbindung hindert den mittleren Abschnitt 46 an einer freien Bewegung beim Aufreißen der Abdeckkappe 9. Die Aufreißlinie 48 definiert den äußeren Rand des mittleren Abschnitts 46, von dem bei geöffneter Abdeckkappe 9 keine Segmente radial nach außen mehr vorstehen. Es entsteht ein ringförmig geschlossener Außenrand des mittleren Abschnitts 46. Die Aufreißlinie 48 grenzt bei nicht geöffneter Abdeckkappe 9 unmittelbar an die Austrittsöffnung 18, genauer an ihren inneren Rand, an. Der innere Rand der Austrittsöffnung wird sogar im gezeigten Ausführungsbeispiel durch die Aufreißlinie 48 gebildet, die den kleinsten Innendurchmesser der Austrittsöffnung 18 definiert. Wie in den Figuren 3 und 4 zu sehen ist, grenzt die Aufreißlinie 48 aber auch unmittelbar an den äußeren Rand 66 des Plakettenteils 60 an, so dass die Stabilität des mittleren Abschnitts 46 durch das Plakettenteil 60 sehr hoch ist. Indem der mittlere Abschnitt 46 aufgrund seiner geringen Ausmaße und der Befestigung am Plakettenteil 60 sehr stabil bleibt, wenn die Abdeckkappe 9 aufreißt, wird die Aufreißkraft, die zum Zerstören der Abdeckkappe längs der Aufreißlinie 48 benötigt wird, herabgesetzt im Vergleich zu einer Aufreißlinie, die in einem elastisch stark verformbaren Bereich liegt wie beispielsweise in der Mitte der Austrittsöffnung 18 oder am äußeren Rand der Austrittsöffnung 18.

## Patentansprüche

1. Gassack-Rückhalteeinrichtung, mit einem Gassackmodul, das einen Gassack (3) und eine beim Aufblasen des Gassacks (3) aufreißende Abdeckkappe (9) aufweist, wobei die Abdeckkappe (9) eine ringförmige Austrittsöffnung (18) für den Gassack (3) abdeckt und einen mittleren Abschnitt (46) besitzt, der in geöffnetem Zustand des Gassackmoduls von der Austrittsöffnung (18) umgeben ist, wobei der mittlere Abschnitt (46) durch eine ringförmige, umfangsmäßig geschlossene Aufreißlinie (48) von radial außen angrenzenden Abschnitten (44) der Abdeckkappe (9) begrenzt und durch ein separates Plakettenteil (60) außenseitig zumindest teilweise abgedeckt ist, wobei die Aufreißlinie an den inneren Rand der Austrittsöffnung (18) angrenzt, und wobei das Plakettenteil (60) den mittleren Abschnitt (46) befestigt und ihn an einer freien Bewegung bei sich öffnender Abdeckkappe (9) hindert, **dadurch gekennzeichnet, daß** der mittlere Abschnitt (46) eine Aufnahmeöffnung (62) für das Plakettenteil (60) besitzt und von oben auf das Plakettenteil (60) so aufgesetzt werden kann, dass der innere Rand des mittleren Abschnitts (46) unter einen seitlich abstehenden Rand (66) des Plakettenteils (60) schnappt.

2. Gassack-Rückhalteeinrichtung nach Anspruch 1, **dadurch gekennzeichnet, dass** die Aufreißlinie (48) den inneren Rand der Austrittsöffnung (18) definiert.

3. Gassack-Rückhalteeinrichtung nach Anspruch 1 oder 2, **dadurch gekennzeichnet, dass** der mittlere Abschnitt (46) starr ausgebildet ist.

4. Gassack-Rückhalteeinrichtung nach einem der vorhergehenden Ansprüche, **dadurch gekennzeichnet, dass** die Aufreißlinie (48) unmittelbar an den äußeren Rand (66) des Plakettenteils (60) angrenzt.

5. Gassack-Rückhalteeinrichtung nach einem der vorhergehenden Ansprüche, **dadurch gekennzeichnet, dass** das Plakettenteil (60) unterseitig eine Vertiefung (80) besitzt, in die ein wulstartiger Fortsatz (70) des mittleren Abschnitts (46) ragt.

6. Gassack-Rückhalteeinrichtung nach einem der vorhergehenden Ansprüche, **dadurch gekennzeichnet, dass** die Abdeckkappe (9) außen im wesentlichen bündig an das Plakettenteil (60) anschließt.

## Claims

1. A gas bag restraint device, comprising a gas bag module which has a gas bag (3) and a covering cap (9) which tears open when the gas bag (3) is inflated, the covering cap (9) covering a ring-shaped outlet opening (18) for the gas bag (3) and having a central section (46) which in the opened state of the gas bag module is surrounded by the outlet opening (18), the central section (46) being delimited from radially outwardly adjoining sections (44) of the covering cap (9) by a ring-shaped, peripherally closed tear line (48) and being at least partially covered on the outside by a separate plaque piece (60), the tear line adjoining the inner edge of the outlet opening (18), and the plaque piece (60) fastening the central section (46) and preventing it from moving freely when the covering cap (9) opens, **characterized in that** the central section (46) has a mounting opening (62) for the plaque piece (60) and can be placed onto the plaque piece (60) from above such that the inner edge of the central section (46) snaps in place underneath a laterally projecting edge (66) of the plaque piece (60).

2. The gas bag restraint device according to Claim 1, **characterized in that** the tear line (48) defines the inner edge of the outlet opening (18).

3. The gas bag restraint device according to Claim 1 or 2, **characterized in that** the central section (46) is constructed so as to be rigid.

4. The gas bag restraint device according to any of the preceding claims, **characterized in that** the tear line (48) is immediately adjacent to the outer edge (66) of the plaque piece (60).

5. The gas bag restraint device according to any of the preceding claims, **characterized in that** the plaque piece (60) has a depression (80) on its lower side into which a bead-like extension (70) of the central section (46) projects.

6. The gas bag restraint device according to any of the preceding claims, **characterized in that** the covering cap (9) adjoins the plaque piece (60) on the outside to be substantially flush therewith.

## Revendications

1. Système de retenue par coussin à gaz, comportant un module de coussin à gaz qui présente un coussin à gaz (3) et un couvercle (9) qui se déchire lors du gonflage du coussin à gaz (3), le couvercle (9) recouvrant un orifice de sortie (18) de forme annulaire pour le coussin à gaz (3) et possédant un tronçon médian (46) qui, à l'état ouvert du module de coussin à gaz est entouré par l'orifice de sortie (18), le tronçon médian (46) étant délimité, par rapport à des tronçons (44) du couvercle (9), adjacents radialement à l'extérieur, par une ligne de déchirement (48) fermée sur la périphérie, et étant recouverts au moins partiellement sur l'extérieur par une partie de plaquette (60) séparée, la ligne de déchirement étant adjacente au bord intérieur de l'orifice de sortie (18) et la partie de plaquette (60) fixant le tronçon médian (46) et l'empêchant de se déplacer librement lorsque le couvercle (9) s'ouvre, **caractérisé en ce que** le tronçon médian (46) possède une ouverture de réception (62) pour la partie de plaquette (60) et peut être posé depuis le haut sur la partie de plaquette (60) de telle sorte que le bord intérieur du tronçon médian (46) s'enclenche sous un bord (66) en saillie latérale de la partie de plaquette (60).

2. Système de retenue par coussin à gaz selon la revendication 1, **caractérisé en ce que** la ligne de déchirement (48) définit le bord intérieur de l'orifice de sortie (18).

3. Système de retenue par coussin à gaz selon la revendication 1 ou 2, **caractérisé en ce que** le tronçon médian (46) est réalisé rigide.

4. Système de retenue par coussin à gaz selon l'une des revendications précédentes, **caractérisé en ce que** la ligne de déchirement (48) est directement adjacente au bord extérieur (66) de la partie de plaquette (60).

5. Système de retenue par coussin à gaz selon l'une des revendications précédentes, **caractérisé en ce que** la partie de plaquette (60) possède sur son côté inférieur un renfoncement (80) dans lequel fait saillie un prolongement (70) en forme de bourrelet du tronçon médian (46).

6. Système de retenue par coussin à gaz selon l'une des revendications précédentes, **caractérisé en ce qu'**à l'extérieur, le couvercle (9) se raccorde sensiblement en affleurement à la partie de plaquette (60).
